(19) Europäisches Patentamt
European Patent Office
Office européen des brevets

(11) EP 0 808 879 A2

(12) # EUROPÄISCHE PATENTANMELDUNG

(43) Veröffentlichungstag:
**26.11.1997 Patentblatt 1997/48**

(51) Int Cl.[6]: **C09B 67/20**, C08K 5/00

(21) Anmeldenummer: **97107715.1**

(22) Anmeldetag: **12.05.1997**

(84) Benannte Vertragsstaaten:
**DE FR GB IT**

(30) Priorität: **24.05.1996 DE 19620989**

(71) Anmelder: **BAYER AG**
**51368 Leverkusen (DE)**

(72) Erfinder:
- **Walz, Klaus, Dr.**
  **51381 Leverkusen (DE)**
- **Schmitz, Gerd**
  **51371 Leverkusen (DE)**
- **Kressner, Michael, Dipl.-Ing.**
  **42799 Leichlingen (DE)**
- **Herrmann, Udo, Dr.**
  **41541 Dormagen (DE)**
- **Leitermann, Josef**
  **51373 Leverkusen (DE)**

(54) **Pigmentpräparationen**

(57) Pigmentpräparationen, enthaltend wenigstens

a) 5 bis 80 Gew.-%, bezogen auf die Präparation, Pigment,

b) ein bei 20°C und Normaldruck flüssiges Anpastungsmittel,

c) ein Amin bzw. dessen Salz mit einem als Zahlenmittel bestimmten mittleren Molekulargewicht von $\overline{M}_n \leq 500$ g/mol und

d) ein Homo- und/oder Copolymerisat aus ethylenisch ungesättigten Monomeren bzw. Comonomeren mit einem als Zahlenmittel bestimmten mittleren Molekulargewicht von $\overline{M}_n$ = 10.000 - 100.000,

sind geeignet zum Pigmentieren von organischem makromolekularem Material, insbesondere Polyurethan-Schaumstoffen.

EP 0 808 879 A2

**Beschreibung**

Die Erfindung betrifft Pigmentpräparationen, ein Verfahren zu ihrer Herstellung, ein Verfahren zum Pigmentieren von organischem makromolekularem Material, insbesondere Kunststoffen auf Polyurethanbasis sowie pigmentierte Kunststoffe.

Polyurethane als Lackbindemittel oder Beschichtungsmaterial, z.B. für Textilien, werden in einer breiten Palette als Ein- oder Zweikomponenten-Systeme, hochelastisch oder hart, lösungsmittelfrei oder lösungsmittelhaltig hergestellt. Sofern diese Materialien pigmentiert werden, stellt sich das Problem, einen geeigneten Pigmentträger zu finden, in dem die Pigmente hochkonzentriert flockungsfrei dispergiert werden können und der mit den verschiedenartigen Polyurethanen verträglich ist, um nicht für jedes spezielle System eine spezielle Pigmentpaste bereithalten zu müssen. Bei den in der Lackindustrie gebräuchlichen Zweikomponenten-Systemen steht für die Pigmentierung zumeist nur die relativ niedrigviskose Polyolkomponente zur Verfügung, in der nicht nur Ruß oder organische Pigmente wie Phthalocyanine, sondern auch anorganische Pigmente wie Eisenoxid-Gelb oder Eisenoxid-Rot nicht ohne Flockungs- und Thixotropieerscheinungen zu dispergieren sind. Das macht zunächst jede Anreibung problematisch und unwirtschaftlich, wirkt sich aber nach Zusatz der Isocyanat-Komponente zudem noch negativ auf Verlauf, Glanz, Farbtiefe, Deckfähigkeit und Glanzhaltung der ausgehärteten Lackfilme aus.

In den Polyurethan-Beschichtungsmaterialien für Textilien liegen sehr hochmolekulare Körper vor, die untereinander nur begrenzt mischbar sind (Ein- oder Zweikomponenten-Systeme) und schon allein aus Viskositätsgründen keine hohen Pigmentkonzentrationen erlauben.

Neben diesen homogenen Polyurethanen haben zellförmige Polyurethane große Bedeutung erlangt, die hinsichtlich ihrer Elastizität von harten zu extrem weichen Schaumstoffen variieren können. Die Anfärbung dieser Schaumstoffe geschieht in der Hauptsache kurz vor der Verschäumung in einem Mischkopf, in dem Polyole und Polyisocyanate gegebenenfalls in Gegenwart von Hilfsstoffen mit Farbpasten innig vermischt werden. Als Bindemittel enthalten solche Farbpasten zumeist Polyester- oder Polyether-Polyole, deren Pigmentaufnahmevermögen insbesondere gegenüber Ruß jedoch so niedrig ist, daß bei Rußkonzentrationen von 10 bis 18 % bereits hochviskose Farbpasten vorliegen. Bei einer normalen Zudosierung einer Farbpaste von 3 bis 5 Gew.-%, bezogen auf die Summe aller in den Schaumstoff eingehenden Komponenten, die noch ohne großen Einfluß auf das mechanische Verhalten der Schaumstoffe ist, wird keine tiefe Anfärbung erreicht, sondern im Falle des Rußes nur eine graue Färbung.

Um hohe Farbtiefen des zu pigmentierenden Materials zu ermöglichen, die Dosierfähigkeit bei der Herstellung des Materials zu gewährleisten und den Einfluß auf das mechanische Verhalten dieser Materialien, insbesondere der Schaumstoffe, durch das Bindemittel klein zu halten, sind gut pumpbare Pasten mit hohen Pigmentgehalten gewünscht.

Eine gute Pump- und Fließfähigkeit der Farbpasten bei den gewünschten hohen Pigmentgehalten spielt auch bei der Herstellung der Farbpasten eine wichtige Rolle. Hochviskose und/oder nicht fließfähige Pasten können technisch nur auf Walzenstühlen oder in Knetern hergestellt werden.

Aufgabe der vorliegenden Erfindung ist daher auch, Pigmentpräparationen zur Verfügung zu stellen, die über den gesamten Herstellungsprozeß, insbesondere mit kontinuierlich betriebenen Rührwerkperlmühlen, eine möglichst niedrige Viskosität bei hohen Pigmentgehalten sowie gute Fließeigenschaften besitzen und somit besonders wirtschaftlich herzustellen sind.

In der Literatur wurden bereits mehrere Wege beschritten, diese Ziele zu realisieren. Aus DE-A 3 115 651 ist bekannt, dem Polyetherpolyolbindemittel als viskositätssenkendes Additiv ein Polyvinylpyrrolidon zuzusetzen. In DE-A 3 803 810 wird als Additiv zum Bindemittel ein Copolymerisat aus α-Olefin und α-β-ungesättigten Dicarbonsäureestern zugegeben. Weiterhin sind als Additive zu Polyesterpolyol- bzw. Polyetherpolyol-haltigen Bindemitteln titanorganische Verbindungen (DE-A 4 236 709) sowie ölmodifizierte Polyurethane (EP-A 603 546) bekannt. In DE-A 2 402 839 wird dagegen als Pigmentträger ein Carbodiimidgruppen-haltiges Harz verwendet.

Die aus dem Stande der Technik bekannten Pigmentpräparationen besitzen jedoch noch einige Nachteile. So sind manche Zusätze bzw. Bindemittelsysteme meist nur bei bestimmten Pigmenten wirksam. Weiterhin kommt es bei den bekannten Präparationen leicht zu Agglomerationen des Pigments, so daß die gewünschte Farbstärke in dem zu färbenden Material nicht erreicht werden kann. Bei einigen dieser Präparationen kommt es beispielsweise während des Schäumungsprozesses von Polyurethan zu unerwünschten Agglomerationen bzw. Aggregatbildung in Folge des Verdünnungseffektes der Paste, wodurch ebenfalls die gewünschte Farbtiefe nicht erreicht wird.

Es wurde nun gefunden, daß die aufgezeigten Nachteile mit den erfindungsgemäßen Pigmentpräparationen überwunden werden können, enthaltend wenigstens

a) 5 bis 80 Gew.-%, bezogen auf die Präparation, Pigment,

b) ein bei 20°C und Normaldruck flüssiges Anpastungsmittel,

c) ein Amin und/oder dessen Salz mit einem als Zahlenmittel bestimmten mittleren Molekulargewicht von $\overline{M}_n \leq 500$

g/mol und

d) ein Homo- und/oder Copolymerisat aus ethylenisch ungesättigten Monomeren bzw. Comonomeren mit einem als Zahlenmittel bestimmten mittleren Molekulargewicht von $\overline{M}_n$ = 10.000 - 100.000.

In einer bevorzugten Ausführungsform enthalten die erfindungsgemäßen Pigmentpräparationen

a) 5 bis 80 Gew.-%, insbesondere 10 bis 60 Gew.-% Pigment,

b) 10 bis 94 Gew.-%, insbesondere 40 bis 90 Gew.-% des Anpastungsmittels,

c) 0,2 bis 10 Gew.-%, insbesondere 0,5 bis 5 Gew.-% des Amins und/oder dessen Salz und

d) 0,2 bis 10 Gew.-%, insbesondere 0,5 bis 3 Gew.-% des Homo- und/oder Copolymerisats aus ethylenisch ungesättigten Monomeren bzw. Comonomeren,

wobei sich die Prozentangaben jeweils auf die Summe der Komponenten a) bis d) beziehen.

Die Pigmente der erfindungsgemäßen Pigmentpräparationen unterliegen keiner Beschränkung. Sie können organischer oder anorganischer Natur sein. Geeignete organische Pigmente sind z.B. solche der Azo-, Anthrachinon-, Thioindigo-Reihe, ferner andere polycyclische Pigmente, z.B. aus der Phthalocyanin-, Chinacridon-, Dioxazin-, Naphthalintetracarbonsäure-, Perylentetracarbonsäure- oder Isoindolin-Reihe sowie Metallkomplex-Pigmente oder verlackte Farbstoffe wie Ca-, Mg-, Al-Lacke von sulfonsäure- und/oder carbonsäuregruppenhaltigen Farbstoffen sowie Ruß, von denen eine große Zahl beispielsweise aus Color Index, 2. Auflage, bekannt ist. Geeignete anorganische Pigmente sind beispielsweise Zinksulfide, Ultramarin, Titandioxide, Eisenoxide, Nickel- oder Chromantimontitandioxid, Cobaltblau, Chromoxide und Chromatpigmente. Vorzugsweise wird Ruß eingesetzt, der im Rahmen dieser Anmeldung auch als Pigment betrachtet wird.

Besonders bevorzugte Pigmente der erfindungsgemäßen Pigmentpräparationen sind beispielsweise Phthalocyaninpigmente, wie Pigment Blue 15, Pigment Green 7, Arylamid-Pigmente wie Pigment Yellow 83, Pigment Yellow 17, Monoazo-Pigmente wie Pigment Red 48, Litholpigmente, Disazokondensationspigmente, wie Pigment Red 166, sowie Ruße, Zinksulfide und Ultramarine. Ganz besonders bevorzugt sind Ruße mit einer BET-Oberfläche von 30 bis 230 $m^2$/g.

Geeignete Anpastungsmittel sind vorzugsweise Ether oder Ester von Monoalkoholen, Polyolen oder Polyetherpolyolen, wobei bevorzugte Ether solche mit mindestens einer Hydroxygruppe sind. Als solche seien beispielsweise Ester von aliphatischen, cycloaliphatischen oder aromatischen Carbonsäuren oder Dicarbonsäuren mit bis zu 8 C-Atomen mit Glykolen oder Polyglykolethern, sowie Ether von aliphatischen, cycloaliphatischen oder aromatischen Mono- oder Polyalkoholen mit bis zu 8 C-Atomen mit Glykolen oder Polyglykolethern genannt.

Als Polyole, insbesondere Polyetherpolyole, sind beispielsweise solche zu nennen, die bei 20°C und 760 Torr flüssig sind und die vorzugsweise Molekulargewichte von 50 bis 10.000 g/mol, insbesondere von 150 bis 10.000 g/mol, aufweisen. Diese können beispielsweise hergestellt werden durch Anlagerung von Ethylenoxid und/oder Propylenoxid an Polyole wie Ethylenglykol, Butylenglykol und insbesondere Trimethylolpropan. Weiterhin sind Umsetzungsprodukte von gegebenenfalls verzweigten $C_1$-$C_6$-Alkoholen, gegebenenfalls durch $C_1$-$C_4$-Alkyl substituierte $C_5$-$C_8$-Cycloalkanole oder gegebenenfalls durch $C_1$-$C_4$-Alkyl substituierte Phenole mit ein bis 8 Ethylenoxid- und/oder Propylenoxid-Äquivalenten zu nennen.

Als Ester seien beispielsweise solche genannt, wie sie beispielsweise in EP-A 14 912 beschrieben sind. Dies sind beispielsweise Terephthalsäure-diglykolester oder ein lineares Oligomer aus Terephthalsäure und Ethylenglykol oder ein Gemisch solcher Oligomeren, das durch Umesterung von Terephthalsäuredimethylester mit Ethylenglykol erhalten worden ist.

Die Polyesterpolyole besitzen vorzugsweise ein als Zahlenmittel bestimmtes, mittleres Molekulargewicht von 300 bis 800 g/mol, besonders bevorzugt von 400 bis 600 g/mol. Sie besitzen vorzugsweise eine Viskosität von 1,5 bis 3 Pa·s, vorzugsweise 1,8 bis 2,8 Pa·s bei Raumtemperatur (20°C).

Bevorzugte Polyester werden durch Umsetzung von Phthalsäure und Polyalkoholen, gegebenenfalls im Gemisch mit einwertigen Alkoholen mit 1 bis 18 C-Atomen, erhalten.

Die bevorzugt genannte Phthalsäure kann auch durch andere Dicarbonsäuren wie Terephthalsäure, Bernsteinsäure oder Adipinsäure ersetzt werden.

Als Polyalkohole können z.B. Glykol, Diethylenglykol, Butandiol-1,4, Butendiol-1,4, Butindiol-1,4, Hexandiol-1,6, Octandiol-1,8, Trimethylolpropan, Glycerin, Pentaerythrit, Sorbit, Saccharose oder bevorzugt Triethylenglykol eingesetzt werden.

Als Beispiele für einwertige Alkohole mit 1 bis 18 C-Atomen seien genannt: Methanol, Ethanol, n-Propanol, i-Propanol, Allylalkohol, Crotylalkohol, n-Butanol, i-Butanol, sec.-Butanol, t-Butanol, n-Amylalkohol, Neopentylalkohol, n-Hexylalkohol, n-Octylalkohol, Caprylalkohol, n-Decylalkohol, Laurylalkohol, Myristylalkohol.

Weitere geeignete Ester sind Umsetzungsprodukte von aliphatischen $C_1$-$C_6$-Carbonsäuren oder durch $C_1$-$C_4$-Alkyl oder OH substituierte aromatische Carbonsäuren mit 1 bis 8 Mol-Aquivalenten Ethylenoxid und/oder Propylenoxid.

Als weitere bevorzugte Anpastungsmittel sind Monohydroxyether zu nennen, worunter vorzugsweise Monohydroxyalkylether verstanden werden, insbesondere solche, die sich von Homo-, Co- oder Block-Co-Polyetherpolyolen, welche durch Umsetzung von Ethylenoxid und/oder Propylenoxid mit Wasser oder mit niedermolekularen, polyfunktionellen Alkoholen, die mindestens zwei Hydroxygruppen besitzen, erhalten wurden, ableiten oder die sich von niedermolekularen polyfunktionellen Alkoholen mit wenigstens zwei, vorzugsweise zwei oder mehreren Hydroxygruppen ableiten. Unter polyfunktionellen Alkoholen werden insbesondere aliphatische $C_2$-$C_6$-Alkohole wie beispielsweise Ethylenglykol, 1,2- oder 1,3-Propandiol, 1,2- oder 1,4-Butandiol, 1,6-Hexandiol, Glycerin, Trimethylolpropan oder Pentaerythrit verstanden. Besonders bevorzugt sind Monohydroxyether, insbesondere Monohydroxypolyether. Als Monoalkylether, insbesondere Mono-$C_1$-$C_4$-Alkylether sind bevorzugt solche zu nennen, die sich von Diethylenglykol oder auf Ethylenglykol oder 1,2- oder 1,3-Propandiol gestartete Alkylenoxidaddukte aus Ethylenoxid und/oder Propylenoxid mit einem als Zahlenmittel bestimmten mittleren Molekulargewicht von 62 bis 5000 g/mol ableiten. Bevorzugte Monoalkylhydroxyether sind auf Mono-$C_1$-$C_{12}$-alkoholen wie aliphatischen, cycloaliphatischen oder aromatischen Monohydroxyverbindungen gestarteten Ethylenoxid und/oder Propylenoxid-Polyether, insbesondere die auf Methanol, Ethanol, Isopropanol, n-Propanol, n-, sec-, tert-Butanol, Phenol, Kresol, tert-Butylphenol, Cyclohexanol gestarteten Monohydroxyether. Ebenfalls bevorzugte Monohydroxyalkylether sind auf Hydroxyalkylamiden wie $CH_3CON(CH_3)$ $CH_2CH_2OH$, N-Hydroxyethylcaprolactam oder N-Hydroxypropylcaprolactamgestarteten Ethylenoxid und/oder Propylenoxid-Polyether.

Bevorzugte Anpastungsmittel sind Glykolether, die der Formel (I) entsprechen:

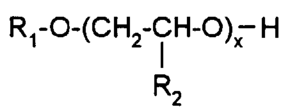
(I)

worin

- $R_1$ gegebenenfalls verzweigtes $C_1$-$C_6$-Alkyl, durch $C_1$-$C_4$-Alkyl substituiertes $C_5$-$C_8$-Cycloalkyl, insbesondere gegebenenfalls durch Methyl substituiertes Cyclohexyl oder gegebenenfalls durch einen oder mehrere $C_1$-$C_4$-Alkylreste substituiertes Phenyl bedeutet,
- $R_2$ Wasserstoff oder $C_1$-$C_3$-Alkyl und
- x eine Zahl von 1 bis 8, vorzugsweise 1 bis 4 bedeutet.

Besonders bevorzugt sind Mono-$C_1$-$C_4$-alkylglykolether, insbesondere Monomethyl-, Monoethyl-, Monoisopropyl-, Mono-n-propyl-, Mono-n-butyl-, Mono-sek.-butyl- oder Mono-tert.-butylglykolether ist, ganz besonders bevorzugt Mono (n-butyl)ethylenglykolether oder Mono(n-butyl)diethylenglykolether als Komponente b).

Ebenfalls bevorzugt sind Glykolester als Anpastungsmittel, die der Formel II entsprechen:

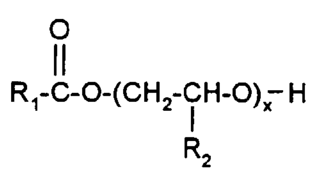
(II)

worin

$R_1$, $R_2$ und x die für die Formel (I) genannte Bedeutung besitzen.

Als Amine bzw. deren Salze der Komponente c) werden vorzugsweise solche eingesetzt, die einen Stickstoffgehalt, bezogen auf die jeweilige Verbindung, von ≥8 Gew.-% besitzen. Besonders bevorzugt sind niedermolekulare, ($C_1$-$C_8$) aliphatische oder cycloaliphatische Amine, wobei die aliphatischen oder cycloaliphatischen Reste gegebenenfalls durch beispielsweise Hydroxyl-, Alkoxy- oder Carboxylgruppen substituiert sind.

Beispielhaft seien genannt: Ethanolamin, Methylethanolamin, Dimethylethanolamin, Diethylethanolamin, Diethanolamin, Methyl-diethanolamin, Triethanolamin, 2-Hydroxypropylamin, Dimethylpropanolamin, Diethylpropanolamin, Dipropanolamin, Tripropanolamin, 2-Dimethylaminoethyl-ethanol, Cyclohexylamin, Methylcyclohexylamin, Dimethylcyclohexylamin, Hydroxyethyl-cyclohexylamin, Dihydroxyethyl-cyclohexylamin, Hydroxyethyl-ethylendiamin, Hydroxypropylethylendiamin. Geeignete Amine sind jedoch auch heterocyclische Verbindungen mit basischen Aminogruppen, wie z.B. Piperazin, N-Hydroxyethylpiperazin, Morpholin, N-Methylmorpholin, N-Hydroxyethylmorpholin, Pyrrolidin, Imidazolidin- oder Oxazolidinverbindungen, Ethylendiamin, 1,2-Propylendiamin, Diethyltriamin, Triethylentetramin, Tetraethylenpentamin oder deren Umsetzungsprodukte mit Ethylenoxid oder Propylenoxid, 3-Dimethylamino-propylamin, Polyglykolether mit endständigen Aminogruppen, Umsetzungsprodukte von Di-isocyanaten mit beispielsweise Dimethylethanolamin oder Dimethylamino-propylamin, Aminoessigsäure, Aminodiessigsäure, Nitriotriessigsäure, Ethylendiamintetraessigsäure oder Amidomethanphosphonsäure.

Als Salze der Amine der Komponente c) werden im Rahmen dieser Anmeldung Salze einer organischen oder anorganischen Säure, quaternäre Ammoniumverbindungen, Aminoxide und Betaine, worunter auch innere Salze von Aminocarbonsäuren zu zählen sind, verstanden.

Als anorganische oder organische Säuren der Salze der Amine der Komponente c) kommen beispielsweise Salzsäure, Schwefelsäure, Phosphorsäure, phosphorigen Säure, Borsäure, Amidosulfonsäure, Ameisensäure, Essigsäure, Hydroxyessigsäure, Chloressigsäure, Milchsäure, Citronensäure, Weinsäure, Gluconsäure, Brenztraubensäure, Bernsteinsäure, Adipinsäure oder Maleinsäure in Betracht.

Als quaternäre Ammoniumverbindungen, Aminoxide oder Betaine des Amins der Komponente c) sind beispielsweise solche zu nennen, wie sie beispielsweise aus tert.-Aminen durch Umsetzung mit Alkylierungsmitteln, wie Dimethylsulfat, Diethylsulfat, Ethylenoxid, Propylenoxid, Dimethylphosphit, Methanphosphonsäuredimethylester, Benzylchlorid, Chloracetamid, Chloressigsäuremethylester oder Natriumchloracetat, bzw. mit Wasserstoffperoxid hergestellt werden können.

Bevorzugte Pigmentpräparationen enthalten als Komponente c) eines oder mehrere der Amine: Ethanolamin, Diethanolamin, Triethanolamin, Propanolamin, Dipropanolamin, Tripropanolamin, Methylethanolamin, Dimethylethanolamin, Methylpropanolamin, Dimethylpropanolamin, 3-Dimethylaminopropylamin, N-Methylmorpholin, N-Hydroxyethylmorpholin, N-Hydroxyethyl-cyclohexylamin, Bis-hydroxyethyl-cyclohexylamin, und/oder deren Salze der Ameisensäure, Essigsäure, Citronensäure, Gluconsäure, Glykolsäure, Milchsäure, Phosphorsäure, phosphorigen Säure, Schwefelsäure, Borsäure oder Toluolsulfonsäure.

Unter den Homo- bzw. Copolymerisaten der Komponente d) werden vorzugsweise solche Produkte verstanden, die in der Lage sind, bei Zusatz von relativ geringen Mengen die Viskosität von pastenartigen Zusammensetzungen zu verringern.

Besonders bevorzugt sind die Homo- bzw. Copolymere der Komponente d), die in organischen Lösungsmitteln und/oder in dem verwendeten Anpastungsmittel bei 20°C löslich sind. Dabei ist es besonders bevorzugt, wenn die Löslichkeit in dem verwendeten Anpastungsmittel >10 g/l bei 20°C beträgt. Als solche seien beispielsweise genannt: Polyvinylacetat, Polyvinylformal, Polyvinylbutyral, Polyvinylpyrrolidon, Celluloseacetate, Celluloseacetat-butyrate, Copolymerisate von Vinylpyrrolidon - mit Vinylacetat, Vinylethern, Styrol, Polymerisate oder Copolymerisate von Acryl- oder Methacrylestern mit anderen ethylenisch ungesättigten Comonomeren u.a.

Als weitere Komponenten enthalten die erfindungsgemäßen Pigmentpräparationen gegebenenfalls weitere Zusätze, wie Verdünnungsmittel, z.B. Di- oder Tributylphosphat oder Methoxypropylacetat, Stabilisatoren und/oder Konservierungsmittel, Kieselgele, Graphit oder Tenside, insbesondere nichtionische Tenside.

Die erfindungsgemäßen Pigmentpräparationen besitzen im allgemeinen eine Viskosität von kleiner als 15.000 mPa.s (bei 23°C, $D = 7.3\ s^{-1}$), bevorzugt 500 bis 10.000 mPa.s jeweils bestimmt nach DIN 53019 (ISO 6388).

Die Erfindung betrifft weiterhin ein Verfahren zur Herstellung der erfindungsgemäßen Pigmentpräparationen, das dadurch gekennzeichnet ist, daß man beispielsweise die Komponenten a) bis d) in beliebiger Reihenfolge vermischt und die Mischung anschließend, beispielsweise mittels eines schnelllaufenden Rührers oder Dissolvers, homogenisiert.

Im Anschluß an die Mischung der Komponenten a), b), c) und d), erfolgt vorzugsweise eine Mahlung auf die gewünschte Pigmentfeinverteilung in kontinuierlicher oder diskontinuierlicher Weise in üblichen Naßzerkleinerungsaggregaten, wie z.B. Kneter, Attritoren, Walzenstühlen, Dissolver, Rotor-Stator-Mühlen, Kugelmühlen und besonders bevorzugt schnellaufenden Rührwerksperlmühlen mit Umlaufgeschwindigkeiten von 5 bis 60 m/s, vorzugsweise 10 bis 20 m/s, die Mahlkörper in der Größe von 0,1 bis 10 mm, vorzugsweise 0,5 bis 2 mm, aus Stahl, Glas, Keramik, Sand oder Kunststoff enthalten.

Sofern das Amin der Komponente c) beispielsweise in seiner Salzform einer anorganischen oder organischen Säure eingesetzt werden soll, kann die Salzbildung beispielsweise auch erst nach der Mahlung durch Zugabe der Säure erfolgen.

Die Zugabe weiterer Zusätze kann erfindungsgemäß vor oder nach der Pigmentzugabe sowie vor oder nach der Mahlung erfolgen.

Die Erfindung betrifft weiterhin ein Verfahren zum Pigmentieren von organischen, makromolekularem Material, insbesondere von Polyurethan-Schaumstoffen, das dadurch gekennzeichnet ist, daß man die erfindungsgemäßen Präparationen für die Einfärbung solcher Materialien, insbesondere von Polyurethan-Schaumstoffen verwendet. Dabei wird die erfindungsgemäße Präparation beispielsweise vor oder während der Polyurethan-Bildung entweder der Polyol-Komponente oder der Polyisocyanat-Komponente oder deren Reaktionsgemischen zugesetzt. Die weitere Reaktion wird in üblicher Weise, d.h. wie für nicht-pigmentierte Polyurethankunststoffe durchgeführt. Angaben dazu sind beispielsweise G. Oertel, KunststoffHandbuch, Bd. 7, Polyurethane, Hansa Verlag München, Wien 1983, Engl. Ausgabe 1985 zu entnehmen.

Die Anfärbung der Polyurethan-Schaumstoffe geschieht vorzugsweise kurz vor der Verschäumung in einem Mischkopf, in dem die Polyole und Polyisocyanate, gegebenenfalls in Gegenwart von Hilfsstoffen mit den erfindungsgemäßen Pigmentpräparationen innig vermischt werden.

**Beispiele**

**Beispiel 1** (Vergleichsbeispiel)

Eine schwarze Pigmentpräparation, enthaltend 18 Gew.-% eines Farbrußes (Komponente a) mit einer B.E.T.-Oberfläche von 45 $m^2/g$ und einer DBP-Adsorption von 45 ml/100 g und 82 Gew.-% eines Adipinsäureesters (Komponente b), wurde mittels eines Dissolvers homogenisiert und im Anschluß in einer schnellaufenden, diskontinuierlichen Rührwerksperlmühle in einer Zeit von 30 Minuten gemahlen.

Der eingesetzte Adipinsäureester, der ein Umsetzungsprodukt von Adipinsäure mit 1,2-Propylenglykol ist, besaß eine OH-Zahl von 167 mg KOH/g, eine Säurezahl von 0,5 mg KOH/g und eine Viskosität von 190 bis 200 mPas bei 50°C.

Die so erhaltene Präparation besaß eine so hohe Viskosität, daß eine technische Herstellung auf kontinuierlich betriebenen Rührwerksperlmühlen nicht möglich war.

**Anwendungsbeispiel 1**

Zur Beurteilung der Farbstärke wurden die Pigmentpräparationen in einen Polyesterurethanschaumstoff gemäß nachfolgender Rezeptur eingearbeitet:

Eine Mischung aus 200 g eines Polyesters aus Adipinsäure, Diethylenglykol und Trimethylolpropan mit einer OH-Zahl von 50 und 73,2 g eines Gemisches aus 65 % 2,4- und 35 % 2,6-Toluylendiisocyanat wurde mit 2 g der Pigmentpräpration versetzt und das Gemisch durch den üblichen Zusatz von Wasser und Hilfsmitteln zur Schaumbildung gebracht. Die visuell ermittelte Farbstärke unter Verwendung der Präparation gemäß Beispiel 1 wurde zu 100 % gesetzt und diente dem Vergleich mit den nachfolgenden Beispielen.

**Beispiel 2**

Nach dem in Beispiel 1 beschriebenen Verfahren wurde eine Pigmentpräparation hergestellt, die 35 Teile des dort eingesetzten Farbrußes, 62,2 Teile Butyldiglykol (Diethylenglykolmonobutylether), 2 Teile N-Methylmorpholin und 0,8 Teile eines Polyvinylburyrals mit einem Molgewicht von 20 000.

Man erhielt nach der Mahlung eine gut fließfähige, pumpbare und flockungsstabile Rußpräparation mit einer hohen Farbstärke (siehe Tabelle).

**Beispiel 3**

Nach dem gleichen Verfahren wie in Beispiel 2 beschrieben wurde eine schwarze Pigmentpräparation hergestellt, enthaltend 40 Teile des Farbrußes aus Beispiel 1, 55,25 Teile Diethylenglykolmonobutylether 3,0 Teile N-Methyldiethanolamin 1,0 Teile Polyvinylbutyral und 0,75 Teile Citronensäure. Man erhielt nach Mahlung eine fließfähige, pumpbare Rußpräparation mit hoher Farbstärke.

**Beispiel 4**

Nach dem gleichen Verfahren wie in Beispiel 2 beschrieben wurde eine schwarze Pigmentpräparation hergestellt, enthaltend 35 Teile des Farbrußes aus Beispiel 1, 46,2 Teile Diethylenglykolmonobuthylether, 15 Teile eines Adpinsäureesters (siehe Beispiel 1) 2,0 Teile Triethanolamin 1,0 Teile Polyvinylbutyral und 0,8 Teile o-Phosphorsäure (85 %ig). Man erhielt nach Mahlung eine gut fließfähige, pumpbare Rußpräparation mit hoher Farbstärke.

**Beispiel 5**

Nach dem gleichen Verfahren wie in Beispiel 2 beschrieben wurde eine schwarze Pigmentpräparation hergestellt, enthaltend 35 Teile des Farbrußes aus Beispiel 1, 60,2 Teile Diethylenglykolmonobutylether, 2,0 Teile Triethanolamin, 1,2 Teile N,N-Dimethylethanolamin, 0,8 Teile Polyvinylbutyral und 0,8 Teile o-Phosphorsäure (85 %ig). Man erhielt nach Mahlung eine gut fließfähige pumpbare Rußpräparation mit hoher Farbstärke.

**Beispiel 6**

Nach dem gleichen Verfahren wie in Beispiel 2 beschrieben wurde eine schwarze Pigmentpräparation hergestellt, enthaltend 35 Teile des Farbrußes aus Beispiel 1, 61,7 Teile Diethylenglykolmonobutylether, 2,0 Teile Triethanolamin, 0,8 Teile Polyvinylbutyral und 0,5 Teile Adipinsäure. Man erhielt nach Mahlung eine gut fließfähige, pumpbare Rußpräparation mit hoher Farbstärke.

**Beispiel 7**

Nach dem gleichen Verfahren wie in Beispiel 2 beschrieben wurde eine schwarze Pigmentpräparation hergestellt, enthaltend 35 Teile des Farbrußes aus Beispiel 1, 60,8 Teile eines Umsetzungsproduktes aus 1 Mol 4-tert.-Butylphenol mit 4 Mol Ethylenoxid, 3 Teile Triethanolamin und 1,2 Teile Polyvinylbutyral. Man erhielt nach Mahlung eine gut fließfähige, pumpbare Rußpräparation mit hoher Farbstärke.

**Beispiel 8**

Nach dem gleichen Verfahren wie in Beispiel 2 beschrieben wurde eine schwarze Pigmentpräparation hergestellt, enthaltend 35 Teile des Farbrußes aus Beispiel 1, 63 Teile Diethylenglykolmonobutylether 1,0 Teile 1-Amino-3-dimethylaminopropan und 1,0 Teile Polyvinylbutyral. Man erhielt nach Mahlung eine gut fließfähige, pumpbare Rußpräparation mit hoher Farbstärke.

**Beispiel 9**

Nach dem gleichen Verfahren wie in Beispiel 2 beschrieben wurde eine schwarze Pigmentpräparation hergestellt, enthaltend 30 Teile eines Farbrußes Beispiel 1, 66 Teile eines Umsetzungsproduktes aus 1 Mol Essigsäure mit 4 Mol Propylenoxid, 3 Teile Triethanolamin und 1,0 Teile Polyvinylbutyral. Man erhielt nach Mahlung eine gut fließfähige, pumpbare Rußpräparation mit hoher Farbstärke. Zu dem gleichen Resultat gelangt man, wenn man als Anpastungsmittel das Umsetzungsprodukt aus Caprolactam mit 4 mol Propylenoxid einsetzt.

**Beispiel 10**

Nach dem gleichen Verfahren wie in Beispiel 2 beschrieben wurde eine schwarze Pigmentpräparation hergestellt, enthaltend 30 Teile eines Farbrußes mit einer BET-Oberfläche von 80 $m^2/g$ und einer DBP(Dibutylphthalat)-Adsorpsion von 123 ml/100 g, 66,5 Teile Diethylenglykolmonobutylether 2,0 Teile Triethanolamin und 1,5 Teile Polyvinylbutyral. Man erhielt nach Mahlung eine gut fließfähige, pumpbare Rußpräparation mit hoher Farbstärke.

**Beispiel 11**

Nach dem gleichen Verfahren wie in Beispiel 2 beschrieben wurde eine schwarze Pigmentpräparation hergestellt, enthaltend 15 Teile eines Farbrußes mit einer BET-Oberfläche vor 100 $m^2/g$, 82,2 Teile Diethylenglykolmonobutylether, 2,0 Teile Triethanolamin und 0,8 Teile Polyvinylbutyral. Man erhielt nach Mahlung eine gut fließfähige, pumpbare Rußpräparation mit hoher Farbstärke.

**Beispiel 12**

Nach dem gleichen Verfahren wie in Beispiel 2 beschrieben wurde eine schwarze Pigmentpräparation hergestellt, enthaltend 35 Teile eines Farbrußes aus Beispiel 1, 58,2 Teile Diethylenglykolmonobutylether, 2,0 Teile Triethanolamin und 0,8 Teile Polyvinylbutyral. Man erhielt nach Mahlung eine gut fließfähige, pumpbare Rußpräparation mit hoher Farbstärke.

**Beispiel 13**

Nach dem gleichen Verfahren wie in Beispiel 2 beschrieben wurde eine schwarze Pigmentpräparation hergestellt, enthaltend 33 Teile eines Farbrußes aus Beispiel 1, 63,6 Teile eines Umsetzungsproduktes aus 1 Mol Phenol und 4 Mol Propylenoxid, 2,0 Teile N-Methyldiethanolamin, 0,8 Teile Polyvinylbutyral und 0,6 Teile o-Phosphorsäure (85 %ig) Man erhielt nach Mahlung eine gut fließfähige, pumpbare Rußpräparation mit hoher Farbstärke.

**Beispiel 14**

Nach dem gleichen Verfahren wie in Beispiel 2 beschrieben wurde eine schwarze Pigmentpräparation hergestellt, enthaltend 27 Teile eines Farbrußes mit einer BET-Oberfläche von 65 $m^2/g$, 69,4 Teile eines Umsetzungsproduktes aus 1 Mol Butanol und 4 Mol Propylenoxid, 2,0 Teile Triethanolamin, 1,0 Teile Polyvinylbutyral. Man erhielt nach Mahlung eine gut fließfähige, pumpbare Rußpräparation mit hoher Farbstärke.

**Beispiel 15**

Nach dem gleichen Verfahren wie in Beispiel 2 beschrieben wurde eine schwarze Pigmentpräparation hergestellt, enthaltend 35 Teile eines Farbrußes aus Beispiel 1, 60,5 Teile Diethylenglykolmonobutylether, 3,0 Teile Triethanolamin und 1,5 Teile Polyvinylpyrrolidon. Man erhielt nach der Mahlung eine gut fließfähige, pumpbare Rußpräparation mit ausreichender Farbstärke.

**Beispiel 16**

Eine rote Pigmentpräparation, enthaltend 15 Teile eines Monoazopigmentes (C.I. Pigment Red 48:3), 41 Teile des Adipinsäureesters aus Beispiel 1, 41 Teile Diethylenglykolmonobutylether, 2,0 Teile Triethanolamin und 1,0 Teile Polyvinylbutyral wurde mittels eines Dissolvers homogenisiert und wie in Beispiel 1 beschrieben gemahlen.

Im Vergleich zu einer ebenso hergestellten Pigmentpräparation bestehend aus 15 Teilen des gleichen Farbpigmentes und 85 Teilen des gleichen Adipinsäureesters ergab eine verbesserte Fließfähigkeit und deutlich geringere Viskosität von 3400 mPas gegenüber 12.700 mPas der Vergleichspaste (gemessen bei einem Schergefälle von 7 $s^{-1}$ und 23°C).

Tabelle 1

| Vergleichstabelle 1 | | | |
|---|---|---|---|
| Beispiel | Viskosität D = 7/s T = 23°C (mPas) | Fließverhalten | Farbstärke in Polyesterurethan % |
| 1 | ca. 19000 | thixotrop fließend | 100 |
| 2 | ca. 1600 | leicht thixotrop, gut fließend | 190 |
| 3 | ca. 4700 | thixotrop, gut fließend | 190 |
| 4 | ca. 1700 | leicht thixotrop, gut fließend | 190 |
| 5 | ca. 1900 | leicht thixotrop, gut fließend | 190 |
| 6 | ca. 1800 | leicht thixotrop, gut fließend | 190 |
| 7 | ca. 3500 | thixotrop fließend | 170 |
| 8 | ca. 1600 | leicht thixotrop, gut fließend | 190 |
| 9 | ca. 2100 | leicht thixotrop, gut fließend | 190 |
| 10 | ca. 1800 | leicht thixotrop, gut fließend | 190 |
| 11 | ca. 1500 | sehr gut fließend | 120 |
| 12 | ca. 1800 | leicht thixotrop, gut fließend | 190 |
| 13 | ca. 2500 | leicht thixotrop, gut fließend | 180 |

Tabelle 1 (fortgesetzt)

| Vergleichstabelle 1 | | | |
|---|---|---|---|
| Beispiel | Viskosität D = 7/s T = 23°C (mPas) | Fließverhalten | Farbstärke in Polyesterurethan % |
| 14 | ca. 2200 | leicht thixotrop, gut fließend | 180 |
| 15 | ca. 2100 | leicht thixotrop, gut fließend | 170 |

**Patentansprüche**

**1.** Pigmentpräparationen, enthaltend wenigstens

a) 5 bis 80 Gew.-%, bezogen auf die Präparation, Pigment,

b) ein bei 20°C und Normaldruck flüssiges Anpastungsmittel,

c) ein Amin und/oder dessen Salz mit einem als Zahlenmittel bestimmten mittleren Molekulargewicht von $\overline{M}_n$ ≤500 g/mol und

d) ein Homo- und/oder Copolymerisat aus ethylenisch ungesättigten Monomeren bzw. Comonomeren mit einem als Zahlenmittel bestimmten mittleren Molekulargewicht von $\overline{M}_n$ = 10.000 - 100.000.

**2.** Pigmentpräparationen gemäß Anspruch 1, enthaltend

a) 5 bis 80, insbesondere 10 bis 60 Gew.-% Pigment,

b) 19 bis 95, insbesondere 40 bis 90 Gew.-% des Anpastungsmittels und

c) 0,2 bis 10, insbesondere 0,5 bis 5 Gew.-% des Amins und/oder dessen Salz und

d) 0,2 bis 10 Gew.-%, insbesondere 0,5 bis 3 Gew.-% des Homo- bzw. Copolymerisats,

wobei sich die Prozentangaben jeweils auf die Summe der Komponenten a) bis d) beziehen.

**3.** Pigmentpräparationen gemäß Anspruch 1, dadurch gekennzeichnet, daß sie mindestens ein Pigment aus der Gruppe der Azo-, Anthrachinon-, Thioindigo-Reihe, polycyclische Pigmente wie Phthalocyanin-, Naphthalintetracarbonsäure-, Chinacridon-, Perylentetracarbonsäsure- oder Isoindolin-Pigmente, Metallkomplex-Pigmente, verlackte Farbstoffe wie Ca-, Mg-, Al-Lacke von sulfonsäure- und/oder carbonsäurehaltigen Farbstoffe, anorganische Pigmente oder Ruß, insbesondere Ruß enthalten.

**4.** Pigmentpräparationen gemäß Anspruch 1, dadurch gekennzeichnet, daß als Anpastungsmittel ein Ether oder Ester von Monoalkoholen oder Polyolen, insbesondere Monohydroxyether, Polyetherpolyol oder Polyesterpolyol eingesetzt wird.

**5.** Pigmentpräparationen gemäß Anspruch 4, dadurch gekennzeichnet, daß das Anpastungsmittel ein Monohydroxyether ist, der einem auf Mono-$C_1$-$C_{12}$-alkohol, insbesondere aliphatischen, cycloaliphatischen oder aromatischen Monohydroxyverbindung, gestarteten Ethylenoxid und/oder Propylenoxid-Polyether entspricht.

**6.** Pigmentpräparationen gemäß Anspruch 4, dadurch gekennzeichnet, daß der Monohydroxyether ein Mono-$C_1$-$C_4$-alkylglykolether, insbesondere Monomethyl-, -ethyl-, -isopropyl-, -n-propyl-, -n-butyl-, -sek.-butyl- oder -tert.-butylglykolether ist, insbesondere Mono-n-butylethylenglykolether oder Mono-n-butyldiethylenglykolether ist.

**7.** Pigmentpräparationen nach Anspruch 1, dadurch gekennzeichnet, daß als Komponente c) ein Amin aus der nachstehenden Gruppe oder dessen Salz einer anorganischen oder organischen Säure, dessen quaternärer Ammoniumverbindung, dessen Aminoxid oder Betain eingesetzt wird:
Ethanolamin, Methylethanolamin, Dimethylethanolamin, Diethylethanolamin, Diethanolamin, Methyl-diethanolamin, Triethanolamin, 2-Hydroxypropylamin, Dimethylpropanolamin, Diethylpropanolamin, Dipropanolamin, Tripropanolamin, 2-Dimethylaminoethyl-ethanol, Cyclohexylamin, Methylcyclohexylamin, Dimethylcyclohexylamin, Hydroxyethyl-cyclohexylamin, Dihydroxyethyl-cyclohexylamin, Hydroxyethyl-ethylendiamin, Hydroxypropyl ethylendiamin, heterocyclische Verbindungen mit basischen Aminogruppen, insbesondere Piperazin, N-Hydroxyethylpiperazin, Morpholin, N-Methylmorpholin, N-Hydroxyethylmorpholin, Pyrrolidin, Imidazolidin- oder Oxazolidinverbindungen, Ethylendiamin, 1,2-Propylendiamin, Diethyltriamin, Triethylentetramin, Tetraethylenpentamin oder deren Umsetzungsprodukte mit Ethylenoxid oder Propylenoxid, 3-Dimethylamino-propylamin, Polyglykolether mit endständigen Aminogruppen, Umsetzungsprodukte von Di-isocyanaten, insbesondere mit Dimethylethanolamin oder Dimethylamino-propylamin, Aminoessigsäure, Aminodiessigsäure, Nitriotriessigsäure, Ethylendiamintetraessigsäure oder Amidomethanphosphonsäure.

**8.** Pigmentpräparationen nach Anspruch 1, dadurch gekennzeichnet, daß als Homo- und/oder Copolymerisat der Komponente d) eine Verbindung aus der nachfolgenden Gruppe eingesetzt wird:
Polyvinylacetat, Polyvinylformal, Polyvinylbutyral, Polyvinylpyrrolidon, Celluloseacetat, Celluloseacetat-butyrate, Copolymerisat von Vinylpyrrolidon -mit Vinylacetat, Vinylethern, Styrol, Polymerisate oder Copolymerisate von Acryl- oder Methacrylestern mit anderen ethylenisch ungesättigten Comonomeren.

**9.** Verfahren zum Pigmentieren von organischen makromolekularem Material, dadurch gekennzeichnet, daß man die Pigmentpräparationen gemäß Anspruch 1 verwendet.

**10.** Verfahren gemäß Anspruch 9 zum Pigmentieren von Polyurethanen, dadurch gekennzeichnet, daß man die Pigmentpräparation gemäß Anspruch 1 vor oder während der Polyurethan-Bildung entweder der Polyol-Komponente, der Polyisocyanat-Komponente oder deren Reaktionsgemisch zusetzt.

**11.** Organisches makromolekulares Material, vorzugsweise Kunststoffe, insbesondere Polyurethane, pigmentiert mit einer Pigmentpräparation gemäß Anspruch 1.